# DEMANDE DE BREVET EUROPEEN

(11) **EP 2 942 690 A1**
(43) Date de publication de la demande: **11.11.2015**
(21) Numéro de dépôt: 15166161.8
(22) Date de dépôt: 04.05.2015
(51) Int. Cl.: G05D 23/19, F24D 19/10

(54) **DISPOSITIF DE COMMANDE POUR CHAUDIÈRE À RÉGULATION EN BOUCLE OUVERTE**

(30) Priorité: 05.05.2014 FR 1454068
(71) Demandeur: Ecometering, 92400 Courbevoie (FR)
(72) Inventeur: Serre, Charlotte, 94300 VINCENNES (FR); de Crevoisier, Stanislas, 92300 LEVALLOIS-PERRET (FR)
(74) Mandataire: Cabinet Netter

(57) **Abrégé**

Un dispositif de commande pour chaudière à régulation en boucle ouverte comprend un récepteur (6) agencé pour être relié à une entrée (4) de température extérieure d'une chaudière à régulation en boucle ouverte (2) et transmettre des données de consigne à la chaudière, ainsi qu'un transmetteur (8) comprenant des moyens de communication permettant d'obtenir des données de consigne obtenues à distance et agencé pour émettre ces données de consigne vers le récepteur (6).

## Description

La présente invention concerne le domaine de la gestion d'énergie pour les chaudières régulées en boucle ouverte, équipées ou qu'il est possible d'équiper d'une loi d'eau.

Le principe de la régulation en boucle ouverte repose sur la détermination d'une puissance de chauffage instantanée en fonction des conditions extérieures détectées. Plus précisément, certaines chaudières présentent une loi d'eau, également appelée « courbe de chauffe », qui associe d'une part, la température extérieure et d'autre part la température de l'eau de chauffage ou plus généralement du fluide caloporteur de chauffage. C'est cette loi d'eau qui détermine la puissance de chauffage en fonction de la température extérieure détectée.

Les chaudières commandées en boucle ouverte sont utilisées aussi bien dans des immeubles pour réaliser un chauffage collectif que dans des maisons individuelles, et la loi d'eau est basée exclusivement sur la température extérieure, ce qui limite les possibilités d'optimiser la consommation d'énergie de ces chaudières.

L'invention vient améliorer la situation.

À cet effet, l'invention propose un dispositif de commande pour chaudière à régulation en boucle ouverte qui comprend un récepteur agencé pour être relié à une entrée de température extérieure d'une chaudière à régulation en boucle ouverte et transmettre des données de consigne à la chaudière, ainsi qu'un transmetteur comprenant des moyens de communication permettant d'obtenir des données de consigne obtenues à distance et agencé pour émettre ces données de consigne vers le récepteur.

Ce dispositif est particulièrement avantageux car il permet de commander la chaudière en fonction de multiples paramètres, d'optimiser la consommation et le confort, et de se connecter simplement avec un système d'optimisation d'énergie externe, par exemple, pour optimiser de la consommation en fonction de données tarifaires.

Selon des variantes de l'invention, le dispositif pourra présenter l'une ou plusieurs des caractéristiques suivantes :
- le transmetteur est connecté par Internet à un serveur,
- le transmetteur reçoit des données de consigne provenant de données météorologiques externes,
- le serveur reçoit des données météorologiques, des données de conversion de température extérieure et des données de loi d'eau de chaudière,
- le serveur est agencé pour déterminer des données de consigne à partir des données reçues du transmetteur, et pour transmettre les données de consignes déterminées au transmetteur,
- le serveur est agencé pour déterminer les données de consigne en fonction de données tarifaires,
- le dispositif comprend en outre au moins une sonde de température intérieure, reliée au transmetteur,
- la sonde de température intérieure est un thermostat, et
- le transmetteur est agencé pour émettre les données issues de la sonde de température intérieure vers le serveur.

L'invention concerne également un procédé de commande d'une chaudière à régulation en boucle ouverte comprenant la transmission de données de température intérieure à un serveur distant, le calcul par le serveur de données de consigne pour une entrée de température extérieure de la chaudière à régulation en boucle ouverte, la réception des données de consigne calculées, et la transmission des données de consignes calculées à l'entrée de température extérieure de la chaudière à régulation en boucle ouverte.

D'autres caractéristiques et avantages de l'invention apparaîtront mieux à la lecture de la description qui suit, tirée d'exemples donnés à titre illustratif et non limitatif, tirés des dessins sur lesquels :
- la figure 1 représente un schéma générique d'un dispositif selon l'invention dans son environnement, et
- la figure 2 représente un diagramme fonctionnel en exemple le dispositif de la figure 1.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

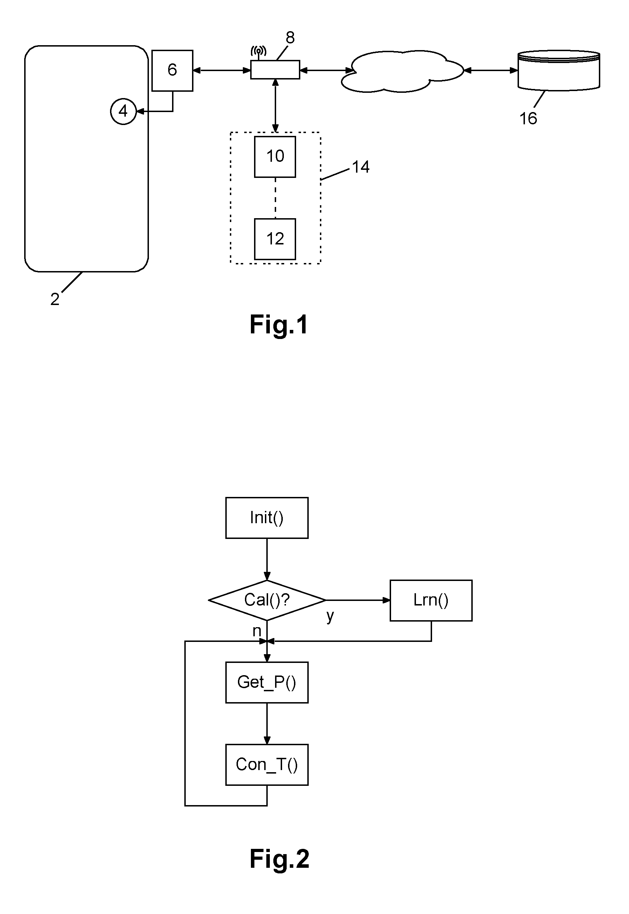

Comme on peut le voir sur la figure 1, une chaudière 2 à régulation en boucle ouverte comprend une entrée 4 pour la consigne de température extérieure. Le dispositif selon l'invention comprend un récepteur 6 relié à l'entrée 4, ainsi qu'un transmetteur 8 qui commande le récepteur 6 au moyen d'une liaison filaire ou sans fil.

Dans l'exemple décrit ici, le dispositif de l'invention comprend également deux sondes de température intérieure référencées 10 et 12 sur la figure 1, l'ensemble des sondes de température intérieure étant désignées par les références 14. Le transmetteur 8 est en outre agencé pour communiquer avec un serveur16 dont la fonction sera décrite ci-après.

Le récepteur 6 comprend dans l'exemple décrit ici des moyens de réception de données, et une résistance variable connectée sur l'entrée 4 de la chaudière 2 pour commander la consigne en fonction des données reçues. Dans une première variante, le récepteur 6 réplique sur la résistance variable les données qu'il reçoit. Dans une deuxième variante, le récepteur 6 comprend un stockage de données qui stocke une loi de température extérieure pour convertir des données de température extérieure en consigne via la résistance variable.

Dans l'exemple décrit ici, le transmetteur 8 est un dispositif de gestion d'énergie, couramment désignée par le terme "box énergie". Ce type d'appareil offre une interface accessible par Internet à un utilisateur final, un gestionnaire d'énergie, ou un gestionnaire d'immeubles, pour permettre de consulter les informations de configuration ainsi que la consommation mesurée en général. Le transmetteur 8 comprend ou est connecté à un modem relié à Internet ou à toute autre forme de réseau permettant une communication Internet. Le transmetteur 8 comprend en outre dans l'exemple décrit ici un processeur pour commander le modem, afin d'envoyer des données vers le récepteur 6, de recevoir des sondes de température intérieure 14, ainsi que d'échanger des données avec le serveur 16. En variante, le transmetteur 8 peut comprendre une sonde de température en vue d'avoir une fonction de sonde de température intérieure 14. Dans cette variante, le transmetteur 8 peut présenter toutes les caractéristiques des sondes de température intérieure 14 comme décrit ci-après.

Le nombre de sondes de température intérieure 14 est dans l'exemple décrit ici de deux. Cependant, ce nombre peut varier entre zéro et plusieurs dizaines. Lorsque les sondes de température intérieure 14 ont une fonction de capture de température uniquement, elles comprennent un capteur de température, un processeur, une batterie et des moyens de communication avec ou sans fil avec le transmetteur 8. Le processeur prend le plus couramment la forme d'un DSP ou d'un microcontrôleur. En variante, les sondes de température intérieure 14 peuvent avoir une fonction de thermostat. Dans ce cas, elles sont munies de moyens (boutons, écran tactile, interface sans contact) permettant à un utilisateur ou un programmateur de renseigner la consigne du thermostat.

Dans l'exemple décrit ici, le serveur 16 reçoit des données de température intérieure des sondes de température intérieure 14, ainsi que des données météorologiques relatives au lieu d'installation de la chaudière 2. Les données météorologiques comprennent des données de température extérieure relative au lieu d'installation de la chaudière 2. Ces données météorologiques sont dites « à distance » car elles ne sont pas nécessairement tirées directement d'un capteur relié à la chaudière 2, mais d'une source de données météorologiques externe. En plus des données de température extérieure, les données météorologiques peuvent comprendre des prévisions météorologiques pour permettre d'affiner la consigne envoyée au récepteur 6.

En outre, le serveur 16 contient un modèle de conversion de température extérieure en consigne pour l'entrée 4, ainsi qu'une loi d'eau de la chaudière 2. Le serveur 16 reçoit également des paramètres de gestion d'énergie qui sont produits soit par une action au niveau de l'interface client du transmetteur 8, soit par désignation d'un profil type de gestion d'énergie. À partir de ces données, un calculateur (non représenté) du serveur 16 détermine une température de consigne qui est renvoyée au transmetteur 8 pour transmission au récepteur 6 et commande de l'entrée 4.

Dans l'exemple décrit ici, le serveur 16 est situé à distance du lieu d'installation de la chaudière 2, par exemple dans les locaux informatiques d'un fournisseur de service offrant le dispositif de l'invention. Cela permet notamment de mutualiser les modèles de conversion de température extérieure en consigne pour l'entrée de la chaudière ainsi que les lois d'eau des diverses chaudières existantes. Cela permet aussi de réaliser des études comparant les différentes installations, et d'améliorer les modèles et lois au moyen d'algorithmes d'optimisation, ainsi que de définir des profils optimisés de gestion d'énergie. Le serveur 16 peut par exemple être relié à des données tarifaires, et utiliser ces informations pour optimiser la consommation tout en garantissant la tenue des consignes. Le terme de serveur doit être pris dans son sens fonctionnel : il recouvre tout système (serveur seul, à redondance, grappe de serveurs, cloud) propre à réaliser les fonctions ici décrites du serveur 16. En variante, le serveur 16 peut être intégré au transmetteur 8, qui devient alors autonome.

Le dispositif de l'invention permet donc de commander une chaudière à régulation en boucle ouverte autrement que par une température extérieure qui n'est pas toujours maîtrisée. Ce dispositif permet ainsi de tenir compte de données de température intérieure et/ou de données de consigne de température intérieure, ou encore de données météo plus complexes, ou bien de données tarifaires pour calculer la consigne à la chaudière 2. Cela était jusqu'à présent impossible.

De plus, le dispositif permet de s'affranchir d'une sonde de température extérieure utilisée classiquement. Cela est avantageux car les sondes de température extérieure représentent un coût, ont une fiabilité limitée et/ou risquent d'être dégradées. Ainsi, c'est la fiabilité de la chaudière 2 qui est améliorée, d'autant plus que les données utilisées pour déterminer la température extérieure sont plus pertinentes que celles d'une sonde de température extérieure qui peut dépendre fortement de son emplacement, et qui ne procure qu'une mesure instantanée, sans possibilité de prévision ou d'analyse des données. Enfin, cela simplifie l'installation de la chaudière 2, puisqu'il n'y a plus de problèmes liés à la connexion entre la chaudière 2 et la sonde de température extérieure. Le dispositif permet donc de commander la chaudière en fonction de multiples paramètres, d'optimiser la consommation et le confort, de réduire le nombre d'équipements nécessaires pour piloter la chaudière, et de se connecter simplement avec un système d'optimisation d'énergie externe, par exemple, pour optimiser de la consommation en fonction de données tarifaires.

La figure 2 représente un diagramme fonctionnel en exemple de la mise en oeuvre du dispositif de la figure 1.

Dans une opération 200, le dispositif est initialisé au moyen d'une fonction Init(). La fonction Init() vise à initialiser tous les éléments du dispositif, à savoir le récepteur 6, le transmetteur 8, les sondes de température intérieure 14 et la connexion au serveur 16. La fonction Init() se termine lorsque tous les éléments sont prêts et que les diverses connexions entre ces éléments sont assurées. Dans certaines variantes, la fonction Init() peut être une simple boucle d'attente suivant un allumage.

Ensuite, dans une opération 210, un test est réalisé afin de déterminer s'il est nécessaire de réaliser une calibration au moyen d'une fonction Cal(). Cette fonction vérifie par exemple si le serveur 16 contient des informations relatives au modèle de conversion de température extérieure et à la loi d'eau de la chaudière 2.

Lorsqu'une calibration est nécessaire, une fonction Lrn() est exécutée dans une opération 220. Dans cette opération, le transmetteur 8 peut commander séquentiellement le récepteur 6 afin de déterminer un modèle de conversion de température extérieure et/ou la loi d'eau de la chaudière 2 en faisant varier progressivement la consigne à l'entrée 4 et en récupérant les mesures résultantes au niveau des sondes de température intérieure 14. En variante, la fonction Lrn() peut également être réalisée par connexion au serveur 16 pour récupérer le modèle de conversion de température extérieure et/ou la loi d'eau de la chaudière 2.

Lorsque la fonction Lrn() est terminée ou lorsqu'une calibration n'est pas nécessaire, une boucle commence avec une opération 230 dans laquelle le transmetteur 8 collecte des informations de température intérieure courante auprès de la ou des sondes de température intérieure 14, puis émet ces données vers le serveur 16 au moyen d'une fonction Get_P().

En réponse, une fonction Con_P() est exécutée dans une opération 240, afin de calculer la température extérieure de consigne à envoyer au récepteur 6. Comme mentionné précédemment, ce calcul est réalisé sur la base des paramètres obtenus à l'opération 230 ainsi qu'à partir de données météorologiques concernant le lieu d'installation de la chaudière 2, de paramètres de profil de gestion d'énergie, avant le renvoi de la consigne au transmetteur 8 pour transmission au récepteur 6.

## Revendications

1. Dispositif de commande pour chaudière à régulation en boucle ouverte, **caractérisé en ce qu'**il comprend un récepteur (6) agencé pour être relié à une entrée (4) de température extérieure d'une chaudière à régulation en boucle ouverte (2) et transmettre des données de consigne à la chaudière, ainsi qu'un transmetteur (8) comprenant des moyens de communication permettant d'obtenir des données de consigne obtenues à distance et agencé pour émettre ces données de consigne vers le récepteur (6).

2. Dispositif selon la revendication 1, dans lequel le transmetteur (8) est connecté par Internet à un serveur (16).

3. Dispositif selon la revendication 2, dans lequel le transmetteur (8) reçoit des données de consigne provenant de données météorologiques externes.

4. Dispositif selon la revendication 2, dans lequel le serveur (16) reçoit des données météorologiques, des données de conversion de température extérieure et des données de loi d'eau de chaudière.

5. Dispositif selon la revendication 2 ou 3, dans lequel le serveur (16) est agencé pour déterminer des données de consigne à partir des données reçues du transmetteur (8), et pour transmettre les données de consignes déterminées au transmetteur (8).

6. Dispositif selon la revendication 4, dans lequel le serveur (16) est agencé pour déterminer les données de consigne en fonction de données tarifaires.

7. Dispositif selon l'une des revendications précédentes, comprenant en outre au moins une sonde de température intérieure (14), reliée au transmetteur (8).

8. Dispositif selon la revendication 7, dans lequel la sonde de température intérieure (14) est un thermostat.

9. Dispositif selon l'une des revendications 2 à 6 prise en combinaison avec la revendication 7 ou 8, dans lequel le transmetteur (8) est agencé pour émettre les données issues de la sonde de température intérieure (14) vers le serveur (16).

10. Procédé de commande d'une chaudière à régulation en boucle ouverte comprenant la transmission de données de température intérieure à un serveur (26) distant, le calcul par le serveur (26) de données de consigne pour une entrée de température extérieure de la chaudière à régulation en boucle ouverte (2), la réception des données de consigne calculées, et la transmission des données de consignes calculées à l'entrée de température extérieure de la chaudière à régulation en boucle ouverte (2).
